# FASCICULE DE BREVET EUROPEEN

(11) **EP 0 434 518 B1**
(45) Date de publication et mention de la délivrance du brevet: **23.08.1995**
(21) Numéro de dépôt: 90403589.6
(22) Date de dépôt: 14.12.1990
(51) Int. Cl.: B60N 3/14, F23Q 7/00

(54) **Corps d'allumage d'allume-cigares et fiche auxiliaire associée à un tel corps, notamment pour véhicules automobiles**
Zigarettenanzünderkörper und Hilfsverbinder für einen solchen Körper, vorzugsweise für Kraftfahrzeuge
Cigarette lighter body and auxiliary connector used with such a body, especially for motor vehicles

(30) Priorité: 18.12.1989 FR 8916701
(43) Date de publication de la demande: 26.06.1991
(73) Titulaire: VALEO VISION, 93012 Bobigny Cédex (FR)
(72) Inventeur: Mallet, Christian, F-91490 Milly-La-Fôret (FR)
(74) Mandataire: Gamonal, Didier

(56) Documents cités:
- DE-A- 3 035 378
- US-A- 3 865 463
- US-A- 4 322 122
- US-A- 4 498 726

## Description

La présente invention concerne les fiches auxiliaires associées à un corps d'allumage d'allume-cigares formant prise auxiliaire pour ladite fiche, notamment pour véhicules automobiles.

Ainsi qu'on le sait et tel que décrit, par exemple, dans le document US-A-4,500,774 (figure 1), conforme au préambule de la revendication 1, un allume-cigares comporte un corps d'allumage, pourvu d'un bilame, dans lequel est logé un bouchon chauffant amovible propre à coopérer avec ledit bilame pour son chauffage.

Le corps d'allumage est propre à être fixé à une paroi du véhicule soit directement, soit indirectement par l'intermédiaire d'une bague conductrice de lumière, par exemple.

Ce corps d'allumage présente également des languettes crantées propres à coopérer avec le bouchon pour retenue de celui-ci. Il est propre à être relie à l'une des bornes de la batterie, tandis qu'il est solidaire centralement un organe de fixation d'un bilame propre à être relié à l'autre borne de la batterie.

Ce corps d'allumage usuellement sert de réceptacle pour le bouchon chauffant et également de prise auxiliaire pour réception d'une fiche auxiliaire notamment pour chauffage d'un chauffe-biberon, alimentation d'un ventilateur ou branchement d'un aspirateur, projecteur auxiliaire, gonfleur etc...

Usuellement, comme décrit par exemple dans les documents DE-A-3 035 378, US-A-3 865 463 et US-A-4 322 122, la fiche comporte un corps isolant d'où font saillie des languettes élastiques pour coopération avec le corps d'allumage, lesdites languettes étant reliées avec un premier câble d'alimentation.

La fiche comporte également une borne propre à coopérer avec l'organe de fixation du bilame.

En pratique ce sont les languettes élastiques qui maintiennent en prise la fiche avec le corps d'allumage et l'organe de fixation.

De tels dispositifs d'alimentation conviennent lorsque l'intensité du courant n'est pas très forte.

Par contre, ils ne conviennent pas, lorsque l'intensité du courant traversant ladite fiche et le corps est importante, par exemple, de l'ordre de 30 ampères.

La présente invention a pour objet de pallier cet inconvénient et donc de créer un nouveau corps d'allumage, pour formation d'un dispositif d'alimentation parcouru par des courants de très grandes intensités.

Elle a également pour objet de créer une nouvelle fiche auxiliaire associée à un tel corps d'allumage.

Suivant l'invention ce problème est résolu par la partie caractérisante de la revendication 1.

La broche, à isolation électrique, peut être rapportée sur le corps ou en variante être solidaire d'une pièce elle-même solidaire du corps d'allumage, telle qu'une bague éclairante et isolante servant à la fixation dudit corps à la paroi d'un véhicule. En outre, la taille du corps d'allumage et le bouchon chauffant peut demeurer inchangée. De plus, la fiche auxiliaire est avantageusement admise à traverser le fond du corps d'allumage pour coopérer sur une grande longueur avec la partie courante de la broche centrale et ce dans l'encombrement des languettes d'alimentation électrique que comporte usuellement le corps d'allumage.

Suivant l'invention une fiche du type susindiqué est caractérisée en ce qu'elle est associée audit corps d'allumage et en ce que le premier élément conducteur consiste en une broche creuse élastique et expansible, pour coopération avec ladite broche centrale du corps d'allumage et expansion au contact de celle-ci.

Suivant une autre caractéristique, ladite broche est fractionnée en mâchoires propres à recevoir un anneau de serrage.

Grâce à l'invention un contact efficace et énergique est obtenu entre la broche centrale du corps d'allumage et la broche élastique de la fiche auxiliaire.

En effet la tête pénétrante de la broche centrale permet un gonflement de la broche élastique venant ainsi coiffer à serrage ladite broche centrale. Cette tête a également une fonction supplémentaire en permettant un contact avec la broche d'une fiche classique.

Avantageusement, pour ce faire, la tête pénétrante de la broche centrale s'étend à l'intérieur du corps d'allumage légèrement en saillie par rapport à la base dudit bilame.

Suivant une autre caractéristique, la broche centrale est disposée dans le fond d'un puits traversant à isolation un trou que présente le fond du corps d'allumage. Les courts-circuits sont ainsi évités, tout en ayant une construction robuste.

Suivant une autre caractéristique, la fiche auxiliaire comporte un élément conducteur doté d'un rebord d'accrochage pour coopération avec les languettes du corps d'allumage.

Cette disposition favorise également le passage de fort courant à travers la prise et la fiche.

On appréciera qu'on tire parti des languettes du corps d'allumage.

La description qui va suivre, à titre d'exemple, illustre l'invention en référence aux dessins annexés dans lesquels:
- la figure 1 est une vue en perspective d'un allume-cigares selon le brevet US-A-4 500 774;
- la figure 2 est une vue en coupe axiale d'une fiche auxiliaire selon l'invention;
- la figure 3 est une vue selon la ligne III-III de la figure 2;
- la figure 4 est une vue en coupe selon la ligne IV-IV de la figure 2;
- la figure 5 est une vue en coupe selon la ligne V-V de la figure 2;
- la figure 6 est une vue d'un dispositif d'alimentation selon l'invention;
- la figure 7 est une vue en coupe montrant le corps d'allumage;
- la figure 8 est une vue selon la flèche F de la figure 7;
- la figure 9 est une vue en coupe axiale selon la ligne I-I de la figure 8.

Dans l'exemple de réalisation décrit, pour formation d'un dispositif d'alimentation parcouru par un courant de fort ampérage (par exemple 30 A) d'un accessoire ou appareil électrique, il est mis en oeuvre une fiche auxiliaire 1 associée à une prise sous forme d'un corps d'allumage 19 d'un allume-cigares de véhicules automobiles.

Il peut s'agir par exemple d'alimenter un gonfleur ou une cafetière.

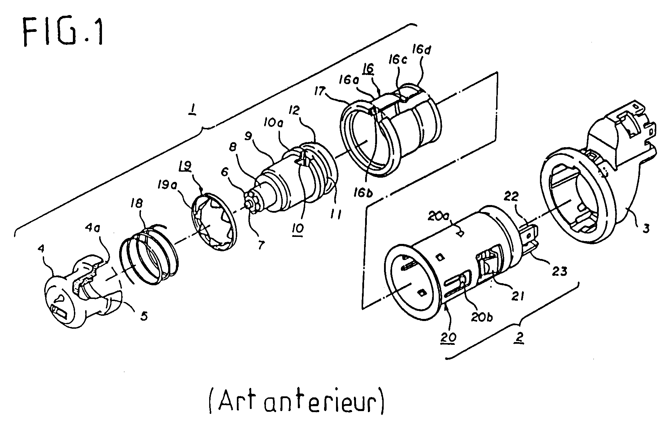

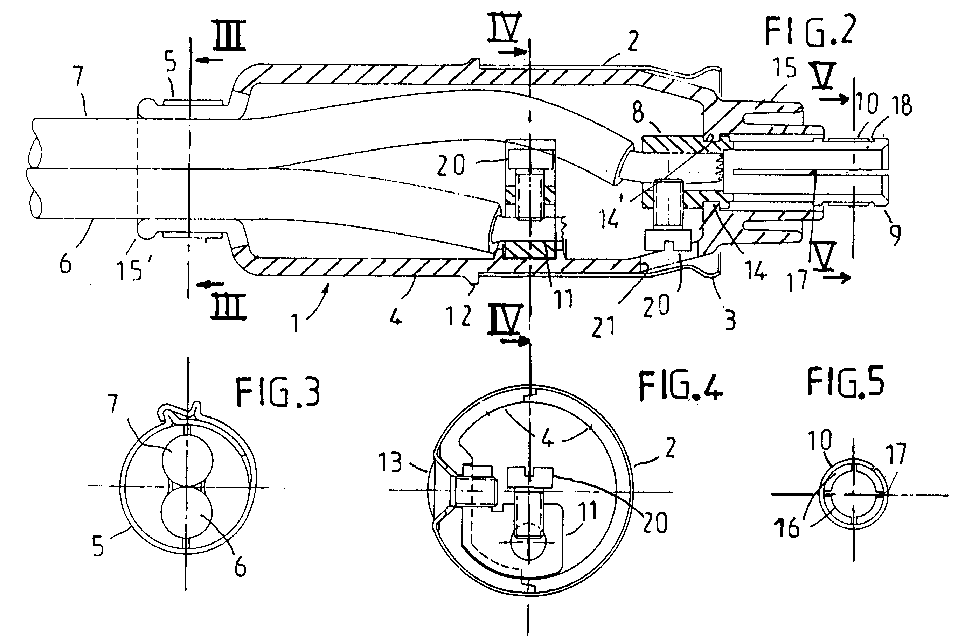

Cette fiche auxiliaire 1 (figure 2) comporte un corps électriquement et thermiquement isolant creux 4, en deux demi-coquilles maintenues ensembles à l'aide d'un collier de serrage élastique 5, un premier élément conducteur 9 et un second élément conducteur 2.

A l'intérieur du corps isolant 4 pénètre deux câbles d'alimentation 6, 7.

Le câble 7 est relié par un dé de raccordement 8 à une broche creuse 9 formant suivant l'invention le premier élément électriquement conducteur, tandis que le câble 6 est relié par un dé de raccordement 11 au second élément électriquement conducteur 2.

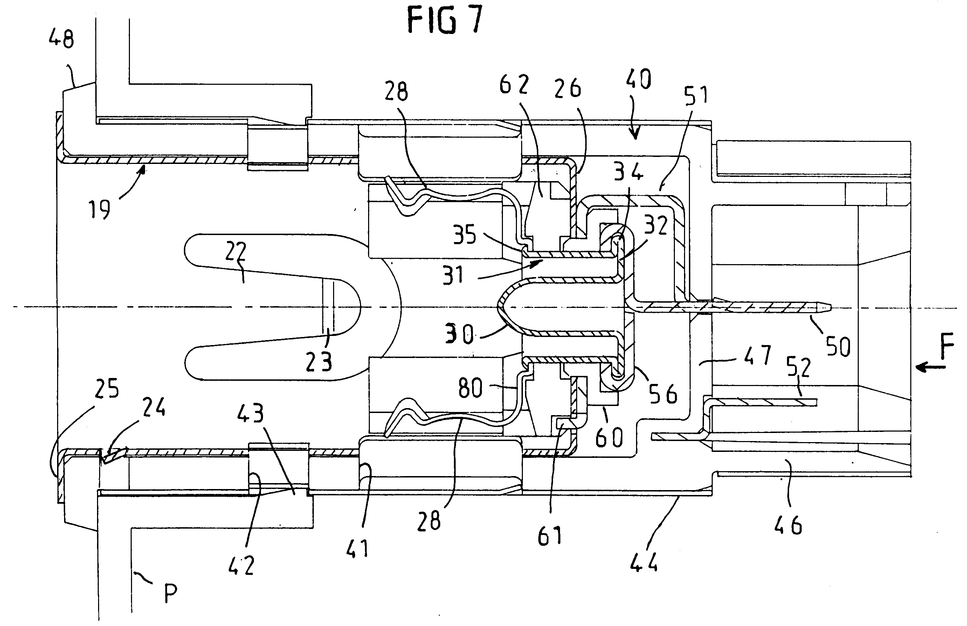

Ce second élément 2 présente un rebord d'accrochage 3 pour coopération avec des languettes de retenue crantées 22 du corps d'allumage 19 (voir figure 7), ici métallique et donc électriquement conducteur.

Le corps 4 est de forme tubulaire et présente une queue 15′ de diamètre réduit et un nez 15 raccordés par un tronc de cône à la partie principale du corps 4.

C'est sur la queue 15', à bourrelet d'extrémité, que vient en prise le collier 5 doté d'un cran et d'une patte d'accrochage, comme couramment employé dans les tuyaux de vidange de machines à laver.

Le corps 4 présente un cran 12 annulaire sur lequel prend appui le second élément conducteur 2 enveloppant et ceinturant le corps isolant 4.

Cet élément conducteur 2 s'étend vers le nez 15 et sert, comme le collier 5, à maintenir en prise les deux demi-coquilles du corps 4, dont la ligne de jonction a une forme en zig-zag pour une bonne coopération entre celles-ci.

Il est fixé au corps 4 par pincement entre ledit corps et une vis à tête fraisée 13, comme visible à la figure 4.

Cet élément 2 est enroulé autour du corps 4 et il présente localement une empreinte, pour coopération avec la tête de la vis 13, le corps 4 présentant un renfoncement local à cet effet.

La vis 13 sert également à la fixation du dé 11 doté d'une saillie avec un trou fileté à cet effet et immobilisé axialement entre deux épaulements de l'une des deux demi-coquilles (figures 2 et 4).

Suivant une caractéristique de l'invention, ces deux demi-coquilles viennent maintenir et fixer centralement le dé 8 (figure 2), grâce à un épaulement annulaire 14 de celles-ci engagé dans une gorge 14′ annulaire du dé 8.

L'épaulement 14 est formé dans la zone de raccordement du nez 15 avec la partie principale du corps 4, il délimite une ouverture centrale du nez 15 de diamètre réduit à l'intérieur de laquelle pénètre la broche 9.

Cette broche 9 fait saillie axialement par rapport au corps 4 et au nez 15 et est solidaire du dé 8 en étant ici d'un seul tenant avec celui-ci.

Les dés 8 et 11 sont dotés chacun d'un passage axial, pour réception du fil du câble respectivement 6, 7, lesdits dés comportent également, transversalement par rapport auxdits passages, un trou fileté pour montage de vis 20 et serrage du câble concerné dans ledit passage.

Suivant l'invention cette broche 9 est creuse, en étant élastique et expansible.

Ici la broche 9 est fractionnée en mâchoires 16 par des fentes 17, le dé 8 formant la partie arrière de ladite broche, à partir de laquelle s'érige les mâchoires 16, qui éventuellement peuvent être striées intérieurement.

Cette broche 9 conductrice de courant est de forme tubulaire et est dotée à son extrémité libre saillante d'une gorge annulaire 18 pour réception d'un anneau de serrage élastique 10 tendant à refermer les mâchoires 16.

Cette broche 9 est suivant l'invention propre à coopérer avec une broche centrale 30 à tête pénétrante solidaire du corps d'allumage 19.

Ce corps d'allumage 19 est également de forme tubulaire et présente de manière connue en soi, deux languettes 22 à crochets ou crans 23 diamétralement opposés, propres normalement à la réception d'un bouchon d'allume-cigares. Le corps d'allumage 19 présente un fond 26 traversé par la broche creuse 9.

Le second élément 2 est propre à épouser l'alésage interne du corps d'allumage 19 et suivant une caractéristique de l'invention les languettes 22 sont propres à coopérer et à venir en prise avec le rebord d'accrochage 3 du conducteur 2, les crans 23 pénétrant dans ledit rebord 3.

Tout ceci est facilité par le fait que ledit rebord 3 s'étend au niveau du tronc de cône raccordant le nez 15 à la partie courante du corps isolant 4, en sorte qu'un espace existe entre ledit rebord 3 et ledit corps 4.

Ce corps d'allumage 19 présente un fond 26 troué pour montage d'une bague d'isolement 60, et à son extrémité libre une collerette 25 pour coopération avec une collerette 48 d'une bague éclairante 40 entourant ledit corps 19.

Cette bague éclairante 40 est, par exemple, en matière plastique translucide et isolante. Elle pénètre (Figure 7) dans une ouverture d'une paroi P du véhicule et présente des trous 42 pour coopération avec des redents 43 appartenant à ladite paroi P et fixation à la paroi P.

La bague éclairante 40 est entourée par un carénage métallique 44 et est dotée d'ouvertures pour dégager les lames d'un bilame 28 ayant deux lames dotées chacune d'un crochet s'étendant à partir d'une base 80 globalement transversale, ledit bilame étant porté à isolation intérieurement par le corps d'allumage 19. Ce bilame 28 est propre à coopérer avec le bouchon de chauffage de l'allume cigare pour chauffage du corps de chauffe de celui-ci par accrochage. Pour plus de précision, on se reportera au susmentionné document US-A-4 500 774.

Ce corps d'allumage 19 présente localement des redents 24 pour accrochage avec la bague éclairante 40 servant ainsi à la fixation dudit corps 19 à la paroi du véhicule, ladite bague 40 étant immobilisée axialement par ladite paroi P.

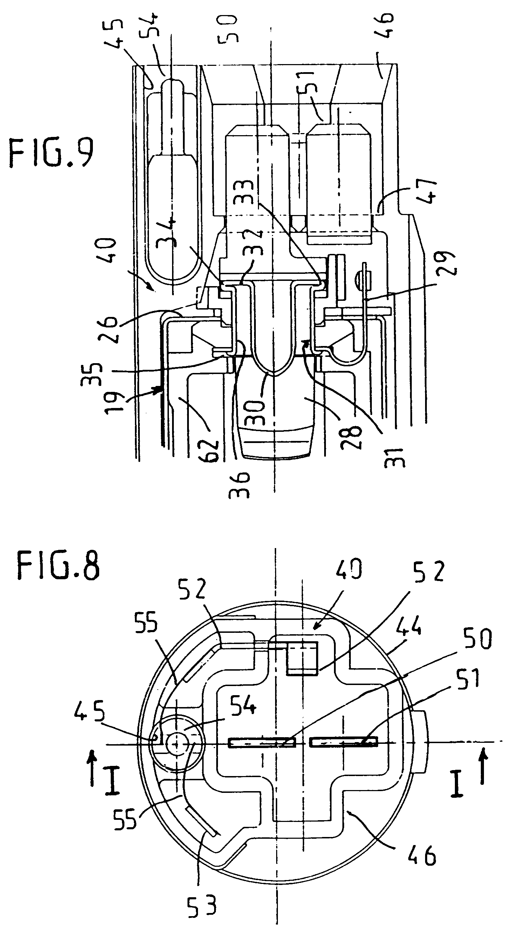

Cette bague éclairante 40 (voir aussi figures 8 et 9) est également de forme tubulaire et présente un fond 47 percé pour passage de languettes d'alimentation 50 et 51.

Ce fond 47 se prolonge vers l'extérieur par une paroi 46 axiale appartenant à une première partie d'un connecteur propre à coopérer avec une seconde partie d'un connecteur porté par le véhicule.

Cette bague éclairante 40 est dotée latéralement, au niveau de la paroi 46, d'un logement 45 pour montage d'une lampe 54.

Cette lampe est reliée par des fils électriques 55 repectivement à une languette 52 et à une languette 53.

La languette 53 coopère avec le corps d'allumage 19 conducteur connecté à la borne négative de la batterie, tandis que la languette 52 est propre à être connectée à la borne positive de la batterie.

Cette languette 52 est ancrée dans la base 47 de la bague éclairante 40 (figure 7), tandis que la languette 53 traverse à fixation ladite base 47.

Le logement 45 est formé dans une paroi de la bague 40 servant de nervures de rigidification à la première partie 46, 47 du connecteur.

Le logement 45 et la première partie de connecteur sont ouverts vers l'extérieur.

C'est au niveau du fond 26 du corps 19 qu'est implantée la broche centrale 30 selon l'invention.

Cette broche centrale 30 traverse à isolation électrique le fond 26 troué à cet effet et appartient à une pièce 31 en forme de gobelet. Ici cette broche 30 a une forme d'ogive. Elle s'érige à partir du fond 32 de la pièce 31, et est creuse.

Cette broche centrale 30 présente donc une extrémité en forme de tête pénétrante fermée et une partie courante tubulaire de forme complémentaire à l'alésage interne de la broche 9.

La pièce 31 comporte une paroi périphérique annulaire 36 de forme tubulaire entourant la broche 30 et se raccordant au fond 32 par un bourrelet 34 constituant un épaulement. Cette pièce 31 constitue une pièce de fixation du bilame 28 et d'une deuxième bague isolante 62 au fond 26 de manière décrite ci après.

L'extrémité libre de la paroi 36 est rabattue transversalement en 35, pour formation d'un épaulement.

Entre les épaulements 34 et 35 sont calés axialement successivement des replis de la languette 50, la bague isolante 60 pénétrant dans l'ouverture du fond 26, un repli de la languette 51 au contact du fond 26 du corps 19, puis la deuxième bague isolante 62 et enfin le bilame 28.

Ce bilame 28, outre les deux lames, propre a coopérer avec le bouchon amovible de l'allume-cigares, présente également (voir aussi fig. 9) une languette 29 dirigée axialement en sens inverse desdites lames, pour formation d'un dispositif de sécurité à plot pour contact avec la languette 51 et établissement d'un court-circuit.

La pièce 31 et donc la broche 30 traversent des ouvertures des deux bagues isolantes 60 et 62, en sorte que ladite pièce 31 est isolée électriquement du fond 26. Cette pièce 31 et cette broche centrale 30 s'étendent en majeure partie et en considérant le plan de la base 80 du bilame 28, dans le sens axial opposé à celui dans lequel s'étendent lesdites lames du bilame 28, en sorte que ledit bilame 28 et lesdites pièces 31,30 s'étendent de part et d'autre de ladite base 80, suivant l'invention.

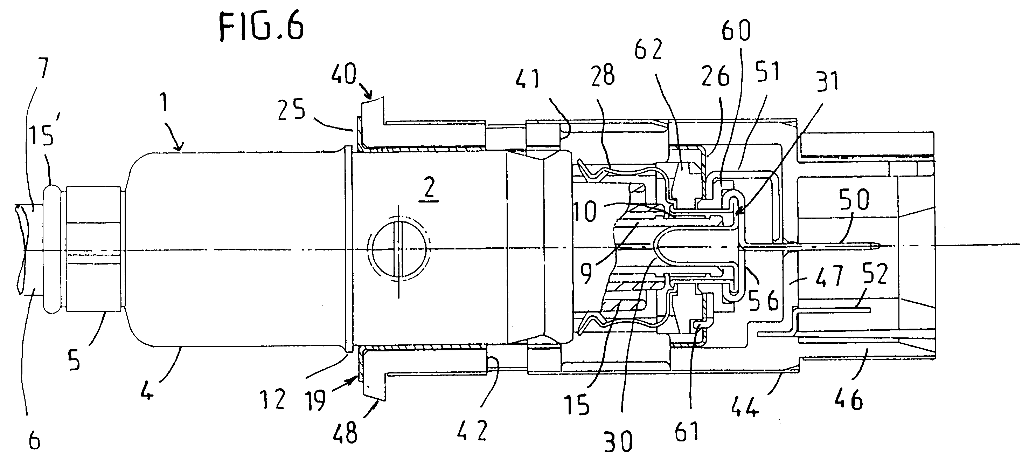

Comme visible à la figure 6, la pièce 31 constitue donc une pièce d'assemblage des divers constituants, la deuxième bague 62 et le bilame 28 s'étendant d'un premier côté du fond 26, tandis que les languettes 51,50 et la première bague isolante 60 s'étendent de l'autre côté dudit fond.

Ainsi la pièce 31, qui traverse à isolation ledit fond 26, sert par ses épaulements 34 et 35 au maintien des susmentionnés constituants au contact du fond 26, l'assemblage étant réalisé par enfilage des divers constituants sur la pièce 31 puis par verrouillage final réalisé par sertissage et formation de l'épaulement 35.

On notera que la languette 50 présente des pattes d'agrafage 56 contournant l'épaulement 34 et venant en prise avec celui-ci, lesdites pattes 56 étant au contact du fond 32 de la pièce 31.

La languette 51 présente également un contour tortueux pour contourner la première bague isolante 60 et venir au contact du fond 26, ladite languette présentant, pour son immobilisation, deux ergots 61, formant détrompeur pour le montage du corps 19 et pénétrant dans un trou correspondant du fond 26.

La languette 51 est reliée à la borne négative de la batterie et il en est ainsi de même du corps d'allumage 19, qui est ici métallique et conducteur.

Ainsi la pièce 31 sert également de pièce d'assemblage aux languettes conductrices 50, 51 sachant que la languette 50, qui s'étend centralement est propre à être connectée ici à la borne positive de la batterie.

On notera que le fond 47 de la bague 40 participe également au maintien de l'ensemble, du fait que les languettes traversent ledit fond à la faveur d'ouvertures.

Comme mieux visible à la figure 6, la dimension axiale de l'anneau de serrage 10, fendu et expansible, est adapté à la dimension axiale de la broche centrale 30.

De même l'espace annulaire séparant la paroi 36 annulaire de la broche centrale 30 également annulaire, est adapté à l'épaisseur de la broche 9 et de l'anneau 10 pour que ladite broche 9 puisse pénétrer à l'intérieur de la paroi 36 et se dilater.

Ainsi qu'on l'aura compris la taille de la broche centrale 30 est légèrement supérieure à l'alésage interne délimité par les mâchoires 16 lorsque celles-ci sont à leur état libre.

Son implantation est déterminée pour que l'extrémité de sa tête pénétrante puisse servir de contact pour une fiche classique sans gêner l'accrochage du bilame 28 avec le bouchon chauffant de l'allume-cigares.

Lorsque l'on introduit la fiche 1, dans le corps 19 formant prise, la broche 9 s'enfile sur la broche centrale 30 et se dilate au contact de celle-ci.

Pour ce faire comme visible, par exemple, à la figure 2, l'extrémité des mâchoires 16 est chanfreinée, en sorte que la coopération avec la broche centrale 30 en forme d'ogive est facilitée et que les mâchoires 16 se dilatent pour pénétration de la broche centrale 30, avec autonettoyage des contacts.

Une fois l'opération d'enfilage terminée les mâchoires 16 sont fermement appliquées contre la partie tubulaire de la broche centrale 30 grâce notamment à l'anneau 10 fendu tendant à refermer élastiquement les mâchoires 16.

On appréciera que la zone de contact, entre les mâchoires 16 et ladite broche 30, est de grande étendue et qu'un contact intime est réalisé entre les deux broches 9 et 30.

Un contact intime existe également entre le second élément conducteur 2 et le corps d'allumage 19, tous deux ici de forme cylindrique à section circulaire, grâce aux languettes 22.

Tout ceci facilite le passage de courant de forte intensité et un bon maintien de la fiche auxiliaire 1.

Bien entendu la taille du corps 4 et dudit élément 2 est fonction de l'alésage interne du corps d'allumage 19. Une fois montée, l'élément 2 de la fiche 1 (figure 6) est à distance du bilame 28, ladite fiche 1 étant dimensionnée en conséquence.

On notera que le cran 12 limite la pénétration de la fiche 1 dans le corps d'allumage 19, par coopération avec la collerette 25.

Comme décrit ci-dessus, la broche centrale 30 peut servir de contact à une fiche classique et c'est la raison pour laquelle sa tête pénétrante fait légèrement saillie à l'intérieur du corps d'allumage 19 par rapport à l'extrémité libre de la partie périphérique 36 de la pièce 31 et par rapport à la base 80 du bilame 28.

D'une manière générale la position de la tête de la broche 30 est déterminée, en sorte que le nez 15 n'entre pas en contact avec la pièce 31.

En variante (non représentée), la partie du corps isolant 4, s'étendant entre le cran 12 et la queue 15′, peut être striée pour faciliter la préhension de la fiche 1.

Bien entendu la présente invention n'est pas limitée aux exemples de réalisation représentés.

En particulier, la broche centrale 30 peut avoir une tête pénétrante de forme tronconique ou en variante en forme de demi-olive. Elle peut être striée.

La présence d'une bague éclairante n'est pas indispensable, le corps d'allumage 19 pouvant être fixé à la paroi du véhicule à l'aide d'un écrou.

L'assemblage des deux demi-coquilles peut être réalisé par clipsage.

La bague éclairante 40 peut être du type de celle du susmentionné document US-A-4 500 774.

L'anneau 10 n'est pas forcément ouvert, il peut être fermé et être par exemple sous forme d'un élément en élastomère.

La broche centrale 30 peut être pleine et être rapportée sur le fond 32 de la pièce 31.

En variante, alors que dans la réalisation décrite la broche centrale 30 est portée à solidarisation par le corps d'allumage 19, ladite broche 30 peut être distincte de la pièce 31, se réduisant alors à un simple rivet fixant les pièces 50, 60, 51, 62 et 28 au fond 26.

Elle peut être rapportée sur le fond 47 de la bague éclairante 40 et être reliée à la languette 50 toujours dotée de ses agrafes 56.

La broche centrale 30 est alors également solidaire du corps d'allumage 19 et peut s'étendre tout entière de l'autre côté de la base 80 par rapport au bilame 28. Il peut en être de même à la figure 6.

On notera que dans tous les cas, que la broche centrale 30 est disposée à l'intérieur d'un puits délimité par la pièce 31 ou un rivet creux épaulé, la broche creuse 9 pénétrant à l'intérieur dudit puits.

Dans tous les cas la bague éclairante 40 en matériau électriquement isolante, comme les bagues 60, 62, protège les connexions électriques et notamment les languettes 50, 51 ainsi que la broche 30.

Cette bague éclairante s'étend au-delà du fond 26, son extrémité libre 46, 47 étant dans l'encombrement radial ou contour hors-tout de ladite bague 40.

Enfin la fiche 1 et le corps d'allumage 19 étant de forme complémentaire, ceux-ci peuvent être cylindriques à section carrée, et il peut en être de même des deux broches 9 et 30.

## Revendications

1. Corps d'allumage (19) d'allume-cigares électrique, notamment pour véhicule automobile, du genre présentant un fond troué (26) et portant intérieurement un bilame (28) avec des lames s'étendant axialement dans un, premier sens, à partir d'une base (80) pour coopération avec le bouchon amovible de l'allume-cigares, caractérisé en ce qu'une pièce d'assemblage (31) traverse à isolation ledit fond (26) du corps d'allumage, en ce que ladite pièce (31) délimite au moins en partie un puits à l'intérieur duquel s'étend une broche centrale (30) solidaire du corps d'allumage (19), en ce que ladite broche centrale (30) présente une tête pénétrante pour coopération avec une broche creuse (9) d'une fiche de courant auxiliaire (1) propre à être introduite dans le corps d'allumage (19) et en ce que ladite pièce (31) et ladite broche centrale (30) s'étendent au moins en majeure partie axialement et en considérant le plan de la base (80) du bilame (28), dans le sens axial opposé audit premier sens, en sorte que ledit bilame (28) et ladite broche (30) s'étendent de part et d'autre de ladite base (80).

2. Corps d'allumage selon la revendication 1, caractérisé en ce que ladite pièce (31) constitue une pièce de fixation d'au moins du bilame (28) et d'une bague isolante (62) au fond (26) du corps d'allumage (19).

3. Corps d'allumage selon la revendication 2, caractérisé en ce que la broche (30) est distincte de la pièce d'assemblage (31) et est rapportée sur le fond (47) d'une bague éclairante (40) entourant le corps d'allumage (19).

4. Corps d'allumage selon la revendication 3, caractérisé en ce que la broche (30) appartient à ladite pièce (31) en forme de gobelet traversant une ouverture que présente le fond (26) à cet effet, et en ce que ladite broche (30) s'érige à partir du fond (32) du gobelet et est creuse.

5. Corps d'allumage selon la revendication 4, caractérisé en ce que ladite pièce (31) présente une paroi périphérique (36) entourant ladite broche (30) et en ce que ladite paroi (36) est délimitée par deux épaulements (34,35) pour maintien de constituants du corps d'allumage, en sorte que ladite pièce (31) constitue une pièce d'assemblage.

6. Corps d'allumage selon la revendication 5, caractérisé en ce que la tête de la broche (30) fait saillie par rapport à l'extrémité libre de la paroi périphérique (36) de la pièce (31).

7. Fiche auxiliaire, notamment pour véhicules automobiles, du genre comportant un corps isolant creux (4), un premier élément conducteur (9) et un second élément conducteur (2), caractérisée en ce qu'elle est associée à un corps d'allumage selon l'une quelconque des revendications 1 à 6 et en ce que le premier élément conducteur (9) consiste en une broche creuse élastique et expansible (9), pour coopération avec ladite broche centrale (30) du corps d'allumage (19) et expansion au contact de celle-ci.

8. Fiche auxiliaire selon la revendication 7, caractérisée en ce que la broche (9) est de forme tubulaire et est fractionnée en mâchoires (16) par des fentes (17) et en ce qu'elle est ceinturée par un anneau élastiquement déformable (10) tendant à refermer les mâchoires (16).

9. Fiche auxiliaire selon l'une quelconque des revendications 7 et 8, caractérisée en ce que le corps isolant (4) est en deux demi-coquilles ceinturées et maintenues ensemble par le second élément conducteur (2).

10. Fiche auxiliaire selon la revendication 9, caractérisée en ce que le second élément conducteur (2) présente un bord d'accrochage (3) pour coopération avec des languettes crantées (22) que présente le corps d'allumage (19).

## Claims

1. A lighter body (19) for an electrical cigarette lighter, especially for a motor vehicle, of the kind having a perforated base (26) and carrying within it a pair of strip contacts (28), with contacts extending axially in a first direction from a base portion (80) for cooperation with the removable plug of the cigarette lighter, characterised in that an assembly member (31) passes through the said base (26) of the lighter body, in that the said member (31) at least partly defines a well, within which there extends a central spigot (30) fixed to the lighter body (19), in that the said central spigot (30) has a penetrating head for cooperation with a hollow spigot (9) of an auxiliary current connector (1) which is adapted to be introduced into the lighter body (19), and in that the said member (31) and the said central spigot (30) extend axially, over at least a major part of their length and with respect to the plane of the base portion (80) of the contact pair (28), in the axial direction opposite to the said first direction, so that the said contact pair (28) and the said spigot (30) lie on either side of the said base portion (80).

2. A lighter body according to Claim 1, characterised in that the said member (31) constitutes a member for fastening at least the contact pair (28) and an insulating ring (62) to the base (26) of the lighter body (19).

3. A lighter body according to Claim 2, characterised in that the spigot (30) is distinct from the assembly member (31) and is carried on the base portion (47) of an illuminating ring (40) surrounding the lighter body (19).

4. A lighter body according to Claim 3, characterised in that the spigot (30) is part of the said member (31), having the form of a goblet extending through an aperture formed for this purpose in the base (26), and in that the said spigot (30) projects from the base (32) of the goblet and is hollow.

5. A lighter body according to Claim 4, characterised in that the said member (31) has a peripheral wall (36) surrounding the said spigot (30), and in that the said wall (36) is delimited by two shoulders (34, 35) for retaining components of the lighter body, whereby the said member (31) constitutes an assembly member.

6. A lighter body according to Claim 5, characterised in that the head of the spigot (30) projects with respect to the free end of the peripheral wall (36) of the member (31).

7. An auxiliary connector, especially for motor vehicles, of the kind comprising a hollow insulating body (4), a first conductive element (9) and a second conductive element (2), characterised in that it is associated with a lighter body according to any one of Claims 1 to 6, and in that the first conductive element (9) consists of a hollow spigot (9) which is elastic and expandable for cooperation with the said central spigot (30) of the lighter body (19), and for expansion in contact with the latter.

8. An auxiliary connector according to Claim 7, characterised in that the spigot (9) is tubular and is divided into jaws (16) by slots (17), and in that it is girdled by a resiliently deformable ring (10) tending to close the jaws (16).

9. An auxiliary connector according to Claim 7 or Claim 8, characterised in that the insulating body (4) comprises two half-shells which are girdled and held together by the second conductive element (2).

10. An auxiliary connector according to Claim 9, characterised in that the second conductive element (2) has a hooking edge (3) for cooperation with hooked tongues (22) of the lighter body (19).

## Patentansprüche

1. Anzünderkörper (19) eines elektrischen Zigarettenanzünders, insbesondere für Kraftfahrzeuge, der Bauart, die einen Boden mit einer Öffnung (26) aufweist und innen einen Bimetallstreifen (28) mit Streifen trägt, die sich ausgehend von einer Basis (80) axial in eine erste Richtung erstrecken, um mit der abnehmbaren Verschlußkappe des Zigarettenanzünders zusammenzuwirken, **dadurch gekennzeichnet**, daß ein elektrisch isolierendes Verbindungsteil (31) durch den Boden (26) des Anzünderkörpers führt, daß das Teil (31) wenigstens teilweise eine Höhlung eingrenzt, in der sich eine mittige Buchse (30) erstreckt, die mit dem Anzünderkörper (19) verbunden ist, daß die mittige Buchse (30) einen durchgehenden Kopf zum Zusammenwirken mit der hohlen Buchse (9) eines Steckers für Hilfsstrom (1) aufweist, der dazu dient, in den Anzünderkörper (19) eingeführt zu werden und daß das Teil (31) und die mittige Buchse (30) sich wenigstens zum größten Teil axial und in bezug zur Basisfläche (80) des Bimetallstreifens (28) in entgegengesetzter axialer Richtung zur oben genannten ersten Richtung so ausdehnen, daß der Bimetallstreifen (28) und die Buchse (30) sich zu beiden Seiten der Basis (80) erstrecken.

2. Anzünderkörper nach Anspruch 1, **dadurch gekennzeichnet**, daß das Teil (31) ein Befestigungsteil aus wenigstens dem Bimetallstreifen (28) und einem isolierenden Ring (62) am Boden (26) des Anzünderkörpers (19) darstellt.

3. Anzünderkörper nach Anspruch 2, **dadurch gekennzeichnet**, daß die Buchse (30) von dem Verbindungsteil (31) getrennt ist und auf den Boden (47) eines Leuchtrings (40), der den Anzünderkörper (19) umgibt, angebracht wird.

4. Anzünderkörper nach Anspruch 3, **dadurch gekennzeichnet**, daß die Buchse (30) zum Teil (31) mit der Form eines Bechers gehört, der durch eine Öffnung führt, die der Boden (26) zu diesem Zweck aufweist und daß die Buchse (30) sich ausgehend vom Boden (32) des Bechers erhebt und hohl ist.

5. Anzünderkörper nach Anspruch 4, **dadurch gekennzeichnet**, daß das Teil (31) eine angrenzende Wand (36) aufweist, die die Buchse (30) umgibt und daß die Wand (36) durch zwei Vorsprünge (34, 35) zum Halten von Bestandteilen des Anzünderkörpers eingegrenzt wird, so daß das Teil (31) ein Verbindungsteil darstellt.

6. Anzünderkörper nach Anspruch 5, **dadurch gekennzeichnet**, daß der Kopf der Buchse (30) in bezug zum freien Ende der das Teil (31) umgebenden Wand (36) vorspringt.

7. Hilfsstecker, insbesondere für Kraftfahrzeuge, der Bauart, die einen hohlen Körper (4), ein erstes Leiterelement (9) und ein zweites Leiterelement (2) umfaßt, **dadurch gekennzeichnet**, daß er mit einem Anzünderkörper nach einem der Ansprüche 1 bis 6 verbunden wird und daß das erste Leiterelement (9) eine elastische und dehnbare hohle Buchse (9) darstellt zum Zusammenwirken mit der mittigen Buchse (30) des Anzünderkörpers (19) und zur Ausdehnung bei Inkontakttreten mit demselben.

8. Hilfsstecker nach Anspruch 7, **dadurch gekennzeichnet**, daß die Buchse (9) röhrenförmig ist und durch Schlitze (17) in Backen (16) geteilt wird, daß sie von einem elastisch verformbaren Ring (10) umgeben ist, um die Backen (16) zu schließen.

9. Hilfsstecker nach einem der Ansprüche 7 und 8, **dadurch gekennzeichnet**, daß der isolierende Körper (4) aus zwei Halbschalen geformt ist, die von dem zweiten Leiterelement (2) umgeben und zusammengehalten werden.

10. Hilfsstecker nach Anspruch 9, **dadurch gekennzeichnet**, daß das zweite Leiterelement (2) einen Rand zum Festhaken (3) zwecks Zusammenwirken mit den gerippten Zungen (22) aufweist, mit denen der Anzünderkörper (19) versehen ist.
